# EUROPEAN PATENT SPECIFICATION

(11) **EP 1 371 834 B1**
(45) Date of publication and mention of the grant of the patent: **23.01.2008**
(21) Application number: 01943978.5
(22) Date of filing: 27.02.2001
(51) Int. Cl.: F02D 19/08, F02D 19/10

(54) **REGULATING METHOD FOR GAS AND LIQUID INTERNAL COMBUSTION ENGINE**
REGELVERFAHREN FÜR GAS- UND FLÜSSIGKEITS-VERBRENNUNGSMOTOR
PROCEDE LE REGLAGE D'UN MOTEUR A COMBUSTION INTERNE A GAZ ET A LIQUIDES

(43) Date of publication of application: 17.12.2003
(73) Proprietor: Ulanovsky, Eduard Alexandrovich, Moskovskaya obl. (RU); Nikitin, Evgeny Alexandrovich, Moskovskaya obl. (RU); Davydov, Vladimir Borisovich, Moskovskaya obl. (RU); Seregin, Vladimir Nikolaevich, Moskovskaya obl. (RU); Korotkikh, Nikolai Nikolaevich, Moskovskaya obl. (RU)
(72) Inventor: Ulanovsky, Eduard Alexandrovich, Moskovskaya obl. (RU); Nikitin, Evgeny Alexandrovich, Moskovskaya obl. (RU); Davydov, Vladimir Borisovich, Moskovskaya obl. (RU); Seregin, Vladimir Nikolaevich, Moskovskaya obl. (RU); Korotkikh, Nikolai Nikolaevich, Moskovskaya obl. (RU)
(74) Representative: Einsel, Martin
(86) International application number: PCT/RU2001/000028
(87) International publication number: WO 2002/068805

(56) References cited:
- EP-A2- 0 133 777
- DE-A1- 3 538 668
- GB-A- 776 552
- JP-A- 58 192 941
- RU-C1- 2 076 225
- SU-A1- 1 784 737
- US-A- 4 278 064

## Description

The invention relates to machine building, more specifically, to regulating gas and liquid internal combustion engines.

The method is known (Yu.N. Vasiliev, L.S. Zolotarevsky, S.I. Ksenofontov. "Gas and Gas Diesel Engines". Moscow, VNIIEgazprom Publishers, 1992, pp.75-77) according to which a Sulzer gas and liquid internal combustion engine is regulated by changing the delivery of gas and gaseous fuel. When doing so, the rotation frequency is changed through varying the gas supply, a desired igniting dose of fuel is changed by means of a device regulating the igniting-fuel stop position in cases of gas pressure drops or power deficiency due to changes in the chemical composition of the gas.

The above method allows startup of liquid-fuel engines only, and in the case of a power deficiency or a gas pressure drop, it fully switches over to a liquid-fuel operation mode, or starts operating on gas containing up to 40% of nitrogen.

However, this method is employed mostly under shipboard conditions. Under conditions of frequent transients or in the case of stringent requirements to the quality of rotation frequency regulation (e.g., when the engine forms part of a power plant), regulating the rotation frequency through changing the gas supply may result in detonation during transients, under- or overspeeding due to non-linearity and highly delayed action of gas/air supply systems when outside the allowable range of excess air factor values.

A method is known (USSR Author's Certificate No. 1784737 A1, Classes F 02 D 19/08, F 02 M 43/00, Application No. 482412.06, filed 14.05.1990, published 30.12.1992, Bulletin issue No.48) according to which the power of a liquid/gas internal combustion engine is regulated through gas supply variation in ranges of high and low loads, while that in the range of medium loads is regulated by changing the rate of gas/air mixture supply. When doing so, the dose of igniting fuel is kept constant in the ranges of high and medium loads whereas that in the range of low loads is raised by means of a movable positive stopper made in the form of a swivel lever driven by a d.c. motor.

This method allows optimizing the composition of the fuel/air mixture in a wide range of operating regimes of automobile engines (generally, naturally aspirated ones), and thereby improving the fuel efficiency and reducing the toxicity of waste gases. However, when using a supercharged engine under conditions posing high requirements to the quality of regulation (e.g., when the engine is employed as part of a power plant), this method results in inadmissible hardness of, or even detonation in, operation of the engine due to inadmissible over- or underspeeding due to non-linearity and highly delayed action of gas/air supply systems because of unallowable excess air factor values.

Highly sophisticated control systems implementing the above methods lead to a high cost of conversion of a diesel engine into a gas & liquid one, as well as to reducing the reliability of engine operation on the whole and the maintainability of such engines.

A method of regulating a gas & liquid internal combustion engine is available (Patent RU 2076225 C1) according to which the rotation frequency is regulated by varying the supply of igniting fuel, a desired igniting dose of fuel being fixed through changing the delivery of gaseous fuel, based on the absence of a disagreement between the actual igniting dose of fuel and a desired one.

Besides, regulating the variation in delivery of gaseous fuel is performed at least two times slower as compared to the case of a positive disagreement, or as fast as possible in the case of a negative disagreement between the actual dose of igniting fuel and a desired one. The disagreement is considered positive if the actual dose of igniting fuel exceeds a desired one, and negative if the actual dose of igniting fuel is lower than a desired one. The high quality of regulating the operation of a gas & liquid engine, improvement of the accelerating ability are achieved by that, in the course of engine operation, maintaining a specified rotation frequency is provided through rapid variation in the supply of igniting fuel as more adapt for combustion in internal combustion engines, and burning in a satisfactory fashion in a much wider range of excess air factor values as compared to gaseous fuel. Moreover, the process of liquid fuel combustion is accompanied by no detonation.

As this takes place, the delivery of igniting fuel after the transient sets in conformity with the balance of power and energy carried into by liquid gaseous fuel. Adding some gas into the engine cylinders disrupts this balance, the rotation frequency rises, and the rotation frequency regulation loop reduces the supply of liquid fuel to until a balance is re-established. The supply of gas in the case of a positive disagreement between the actual dose of igniting fuel and a desired one is increased to until the disagreement becomes zero. In the case of a positive disagreement, regulating the variation in gas supply at least 2 times slower than regulating the supply of igniting fuel allows avoiding instable operation of the frequency regulation loop with increasing the air excess factor. In the case of a negative disagreement between the actual supply of igniting fuel and a desired one, the gas supply is reduced as fast as possible to avoid unstable operation of the engine due to a low delivery of igniting fuel.

In the case of a gas pressure drop or gas composition deterioration (as far as the energy value is concerned) with the fully open gas supply control, the delivery of igniting fuel sets in in conformity with the balance of power and energy delivered into with gas and igniting fuel. The quality of engine regulation and the useful power output keep invariant.

The above method has a shortcoming of principle, viz., when increasing the engine load, the rotation frequency drops, which results in a rise of the dose of igniting fuel. This leads to enrichment of the mixture in the cylinders.

At the same time, a positive disagreement of the igniting dose arises, which brings about an increase in the amount of gas supplied to the cylinders. With the existing delay in response of the air supply system (in particular, the system includes a turbosupercharger), depending on the extent of overfueling in the cylinders, increasing the rate of gas supply may lead to that the amount of air at a certain moment of time will become lower than the desired level, which results in a reduction or even rise in the power and recovery of the engine rpm. In some cases, the power and the engine rpm may even diminish.

Overfueling is contributed by overriding the engine, when the igniting dose of fuel is injected to both achieve a desired power and restore the rpm (by kinetic energy).

To preclude adverse overfueling, the mixture is monitored, and once some overfueling is detected, the supply of gas is stopped, for a while or completely, even in the case of a positive disagreement of the igniting dose. Such monitoring of the mixture condition can be performed in a number of ways. For instance, there is a method of direct control of gas composition at the engine outlet, or a method of indirect control of power variation or cyclic delivery (igniting dose) in cases of short-term rises in the gas supply rate.

The invention is aimed at ensuring the absence of abrupt drops of the rotation frequency of a gas & liquid engine under conditions of load surges.

This objective is achieved with the help of a method of regulating a gas & liquid engine wherein rotation frequency variation is regulated through changing the supply of igniting fuel, while the supply of gas is varied within a range ensuring a desired igniting dose of the fuel, on the one hand, and preventing overfueling in the cylinders, on the other hand.

The method differs in that the supply of gas is varied within a range ensuring a desired igniting dose of the fuel, on the one hand, and precluding overfueling in the cylinders, on the other hand.

A second modification of the method consists in that, in the case of a deficiency of gas or deficiency of the energy component thereof, a desired engine power is provided through increasing the igniting dose of liquid fuel.

The invention is illustrated in the drawings below.

**Fig. 1** displays a control system allowing the implementation of the proposed method of regulating a gas & liquid internal combustion engine.

**Fig.2** displays timing charts describing the regulation of an internal combustion engine according to the invention.

The control system allowing the implementation of the proposed method of regulating a gas & liquid internal combustion engine, comprises rotation frequency regulator 1 connected to igniting liquid fuel supply control 2, igniting fuel supply control position detector 3, gas supply regulator 4, gaseous fuel supply control 5 supplying gas to engine 6, to which load 7 is coupled.

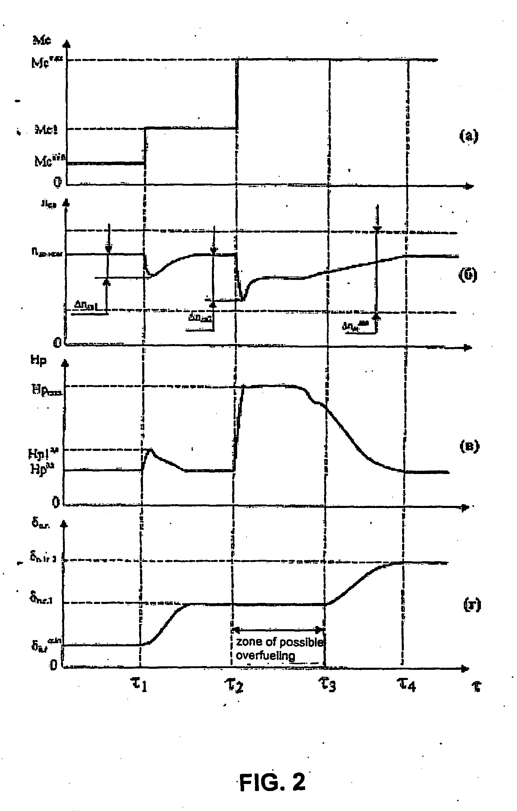

The implementation of the method is illustrated in Fig.2, where "a" is the motor shaft resistance moment, Mc; "6" is the rotation frequency, n_{AB}; "B" is the position of the igniting liquid-fuel dose control, Hp; "r" is the opening of the igniting liquid-fuel dose control, δₙᵣ; "τ" is the process time.

The proposed method of regulating a gas & liquid internal combustion engine is implemented as follows.

At the initial moment of time "0", the engine operates at a power level as low as possible for the gas diesel cycle, the external resistance moment being Mc^{min} ("a" in Fig.2).

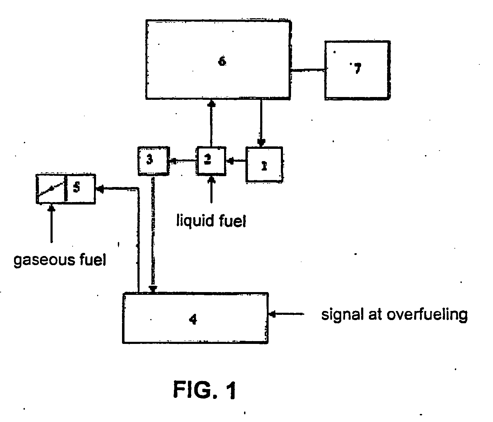

At the moment of time τ₁ (Fig.2), a resistance moment surge (external load) at the motor shaft occurs, Mc₁ ("a" in Fig.2). As this takes place, the rotation frequency n_{AB} ("6" in Fig.2) drops by Δn_{AB1} ("6" in Fig.2), and rotation frequency regulator (Fig.1), via igniting liquid fuel supply control 2 (Fig.1), raises the supply of igniting fuel, Hp^{3A} ("B" in Fig.2) to a value of Hp₁^{3A}. Then, gas supply regulator 4 (Fig.1), via gaseous fuel supply control 5 (Fig.1), in the case of a zero overfueling, raises the delivery of gaseous fuel to δₙᵣ₁ ("r" in Fig.2) which ensures a desired igniting fuel dose Hp^{3A} ("B" in Fig.2). At the moment of time τ₂ ("r" in Fig.2), a resistance moment surge at the motor shaft occurs, Mc₂^{max} ("a" in Fig.2). As this takes place, the rotation frequency n_{AB} drops by Δn_{AB2} ("6" in Fig.2), and rotation frequency regulator 1 (Fig. 1) keeps a specified rotation frequency n_{AB}^{HOM} ("6" in Fig.2) via igniting liquid fuel supply control 2 (Fig.1) to a value of Hp=100% ("B" in Fig.2). As this takes place, the availability of overfueling in the engine cylinders is determined based on results of analysis of the igniting fuel supply control position, or analysis of exhaust gases, or results of analysis of the engine power growth rate. In case some overfueling is possible, gas supply regulator 4 (Fig.1) prevents gaseous fuel supply control 5 (Fig.1) from increasing the delivery of gaseous fuel and thereby ensures the absence of overfueling in the cylinders.

A required moment developed at the motor shaft at this moment of time is provided through an increased delivery of igniting fuel. Besides, in the case of a gas deficiency or deficiency of its energy component, a required engine power is provided through an increased igniting dose of liquid fuel.

By moment of time τ₃, the possibility of raising the delivery of gaseous fuel without overfueling in the cylinders is determined based on results of analysis of the igniting fuel supply control position, or analysis of exhaust gases, or results of analysis of the engine power growth rate. Via the gas supply control, gas supply regulator 4 (Fig.1) changes the delivery of gas to a value of δₙᵣ₂ ("r" in Fig.2) which ensures a desired igniting dose of liquid fuel Hp^{3A} ("B" in Fig.2) at the moment of time τ₄ (Fig.2).

Therefore, owing to this method, the engine rotation frequency remains within the allowed range Δn_{AB}^{Aon} ("6" in Fig.2).

This method can be implemented efficaciously when supplying power consumers featuring a sharply variable load curve (e.g., drilling rigs).

## Claims

1. A method for regulating a gas and liquid engine when a rotation frequency is regulated by changing the delivery of igniting fuel, and **characterized by** that the gas delivery is changed within a range which ensures a desired dose of the igniting fuel on one hand, and prevents overfueling in cylinders on the other hand.

2. A method according to claim 1, wherein in the case of gas deficiency or deficiency of energy component thereof, the power of the engine is provided by increasing the igniting dose of liquid fuel.

## Patentansprüche

1. Verfahren für das Regeln eines Verbrennungsmotors für Gas und Flüssigkeit, bei dem eine Motordrehzahl durch die Änderung der Zufuhr des Verbrennungskraftstoffs geregelt wird,
**dadurch gekennzeichnet,**
**dass** die Gaszufuhr innerhalb eines Bereiches geändert wird, der eine gewünschte Menge eines Verbrennungskraftstoffes einerseits sicherstellt und die Überversorgung mit Kraftstoff in den Zylindern andererseits vermeidet.

2. Verfahren nach Anspruch 1, in welchem im Falle einer Unterversorgung mit Gas oder einer Unterversorgung von dessen Energiekomponenten die Leistung des Motors durch eine Steigerung der Verbrennungsmenge des Flüssigbrennstoffes zur Verfügung gestellt wird.

## Revendications

1. Procédé de réglage d'un moteur à gaz et liquide lorsqu'une fréquence de rotation est réglée en changeant l'alimentation en carburant inflammable, et **caractérisé en ce que** l'alimentation en carburant est changée au sein d'une gamme, qui assure une dose souhaitée du carburant inflammable d'un côté et empêche un excédent d'alimentation dans les cylindres de l'autre côté.

2. Procédé selon la revendication 1, dans lequel la puissance du moteur est fournie en augmentant la dose inflammable de carburant liquide, dans le cas d'une déficience de gaz ou d'une déficience de son composant énergétique.
